# EUROPEAN PATENT APPLICATION

(11) **EP 2 978 234 A1**
(43) Date of publication of application: **27.01.2016**
(21) Application number: 15176676.3
(22) Date of filing: 14.07.2015
(51) Int. Cl.: H04N 21/4788, H04N 21/845, H04N 21/658, H04N 21/43

(54) **METHOD AND APPARATUS FOR SHARING VIDEO INFORMATION**

(30) Priority: 24.07.2014 CN 201410356152
(71) Applicant: Xiaomi Inc., Beijing 100085 (CN)
(72) Inventor: LI, Chuangqi, 100085 Haidian District (CN); GAO, Yingjun, 100085 Haidian District (CN); WU, Nan, 100085 Haidian District (CN)
(74) Representative: Reeve, Nicholas Edward

(57) **Abstract**

Embodiments of the present disclosure provide a method and apparatus for sharing video information. The method includes: receiving, by a server, description information of a video from a first user end; and sending the description information to a second user end having friendship with the first user end, such that the second user end plays the video according to the received description information. In embodiments of the disclosure, a server may send description information of a video on a terminal to another terminal. Video information is propagated from one terminal to another terminal, such that propagation of video information is not limited between a server and terminals, and timely sharing of playing of videos may be implemented between terminals, thereby constituting a video information pushing and sharing mechanism between terminals. This hence achieves higher propagation speed of video information, and thus greatly improves the usage rate of video resources.

## Description

### TECHNICAL FIELD

Embodiments of the present disclosure relate to the field of network video technology, and more particularly, to a method and apparatus for sharing video information.

### BACKGROUND

With the development of the Internet technologies, more and more users watch videos over the Internet. For example, in a scenario, users may use an Internet video set-top box, connect one terminal of the Internet video set-top box to a television, connect the other terminal thereof to a server of a video service provider over the Internet, and then select to watch their desired or interested video resources by operating the Internet video set-top box.

During implementation of the present disclosure, the inventors have identified that the propagation speed of the video information is low at present, such that video information sharing is hard to be implemented. Sharing of the video information only relies on a server and is transmitted to individual user terminals connecting to the server, thereby restricting usage rate of video resources.

### SUMMARY OF THE INVENTION

To solve the problem existent in related technologies, the invention provides a method and apparatus for sharing video information, to improve propagation speed of video information, thus to improve usage rate of video resources.

According to a first aspect of the invention, a method for sharing video information is provided. The method includes:
receiving, by a server, description information of a video from a first user end; and
sending the description information to a second user end having a friendship with the first user end, such that the second user end plays the video according to the received description information.

Optionally, the description information includes at least one of: a play progress of the video being currently watched by the first user end, a comment made by the first user end on the video, an identifier of the video, a play address of the video, and a play progress of the video when the first user end comments on the video.

Optionally, after the sending the description information to a second user end having a friendship with the first user end, the method further includes:
receiving a comment made by the second user end on the video; and
sending the comment made by the second user end on the video to the first user end, such that the first user end receives and displays the comment.

According to a second aspect of the invention, a method for sharing video information is provided. The method includes:
receiving, by a second user end, description information from a server, the description information being description information of a video given by a first user end having a friendship with the second user end;
displaying the description information; and
playing the video according to the description information upon receiving an operation for triggering playing of the video.

Optionally, the description information includes at least one of: a play progress of the video being currently watched by the first user end, a comment made by the first user end on the video, an identifier of the video, a play address of the video, and a play progress of the video when the first user end comments on the video.

Optionally, the playing the video according to the description information includes:
if the description information includes an identifier of the video or/and a play address of the video, acquiring the video according to the identifier or/and the play address, and playing the video from the start of the video; or
if the description information includes an identifier of the video or/and a play address of the video, and the description information further includes a play progress of the video being currently watched by the first user end, acquiring the video according to the identifier or/and the play address, and playing the video from the play progress of the video being currently watched by the first user end; or
if the description information includes an identifier of the video or/and a play address of the video, and the description information further includes a play progress of the video when the first user end comments on the video, acquiring the video according to the identifier or/and the play address, and playing the video from the play progress of the video when the first user end comments on the video.

Optionally, after the playing the video according to the description information, the method further includes:
receiving a comment on the video; and
sending the comment to the server, such that the server sends the comment to the first user end for display.

According to a third aspect of the invention, an apparatus for sharing video information is provided. The apparatus includes:
a first description information receiving unit, configured to receive description information of a video from a first user end;
a description information forwarding unit, configured to send the description information to a second user end having a friendship with the first user end, such that the second user end plays the video according to the received description information.

Optionally, the description information includes at least one of: a play progress of the video being currently watched by the first user end, a comment made by the first user end on the video, an identifier of the video, a play address of the video, and a play progress of the video when the first user end comments on the video.

Optionally, the apparatus further includes:
a first comment receiving unit, configured to receive a comment made by the second user end on the video; and
a comment forwarding unit, configured to send the comment made by the second user end on the video to the first user end, such that the first user end receives and displays the comment.

According to a fourth aspect of the invention, an apparatus for sharing video information is provided. The apparatus includes:
a second description information receiving unit, configured to receive description information from a server, the description information being description information of a video given by a first user end having a friendship with a second user end;
a description information displaying unit, configured to display the description information; and
a video playing unit, configured to play the video according to the description information upon receiving an operation for triggering playing of the video.

Optionally, the description information includes at least one of: a play progress of the video being currently watched by the first user end, a comment made by the first user end on the video, an identifier of the video, a play address of the video, and a play progress of the video when the first user end comments on the video.

Optionally, when playing the video according to the description information, the video playing unit is configured to:
if the description information includes an identifier of the video or/and a play address of the video, acquire the video according to the identifier or/and the play address, and play the video from the start of the video; or
if the description information includes an identifier of the video or/and a play address of the video, and the description information further includes a play progress of the video being currently watched by the first user end, acquire the video according to the identifier or/and the play address, and play the video from the play progress of the video being currently watched by the first user end; or
if the description information includes an identifier of the video or/and a play address of the video, and the description information further includes a play progress of the video when the first user end comments on the video, acquire the video according to the identifier or/and the play address, and play the video from the play progress of the video when the first user end comments on the video.

Optionally, the apparatus further includes:
a second comment receiving unit, configured to receive a comment on the video; and
a comment sending unit, configured to send the comment to the server, such that the server sends the comment to the first user end for display.

According to a fifth aspect of the invention, an apparatus for sharing video information is provided. The apparatus includes:
a processor; and
a memory for storing instructions executable by the processor;
wherein the processor is configured to:
receive description information of a video from a first user end; and
send the description information to a second user end having a friendship with the first user end, such that the second user end plays the video according to the received description information.

According to a sixth aspect of the invention, an apparatus for sharing video information is provided. The apparatus includes:
a processor; and
a memory for storing instructions executable by the processor;
wherein the processor is configured to:
receive description information from a server, the description information being description information of a video given by a first user end having a friendship with a second user end;
display the description information; and
play the video according to the description information upon receiving an operation for triggering playing of the video.

According to a seventh aspect of the invention, there is provided a computer program product comprising instructions which when executed on a computer cause the computer to perform any one of the above methods.

The technical solutions provided in the embodiments of the present invention may achieve the following beneficial effects:

In the embodiments of the present invention, a server may send description information of a video on a terminal to another terminal. In this way, video information is propagated from one terminal to another terminal, such that the propagation of the video information is not limited between a server and terminals, and timely sharing of playing of videos may be implemented between terminals, thereby constituting a video information pushing and sharing mechanism between terminals. This hence achieves a higher propagation speed of the video information, and thus greatly improves the usage rate of the video resources.

It shall be appreciated that the above general description and the detailed description hereinafter are only illustrative, and do not limit the present invention which is defined by the claims.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
FIG. 1 is a flowchart illustrating a method for sharing video information according to an exemplary embodiment of the present disclosure;
FIG. 2 is a flowchart illustrating a method for sharing video information according to another exemplary embodiment of the present disclosure;
FIG. 3 is a flowchart illustrating a method for sharing video information according to still another exemplary embodiment of the present disclosure;
FIG. 4 is a flowchart illustrating a method for sharing video information according to yet still another exemplary embodiment of the present disclosure;
FIG. 5 is a schematic diagram illustrating signaling of a method for sharing video information according to an exemplary embodiment of the present disclosure;
FIG. 6 is a schematic diagram illustrating an interface after a second user end receives description information;
FIG. 7 is a schematic diagram illustrating signaling of a method for sharing video information according to yet still another exemplary embodiment of the present disclosure;
FIG. 8 is a block diagram illustrating an apparatus for sharing video information according to an exemplary embodiment of the present disclosure;
FIG. 9 is a block diagram illustrating an apparatus for sharing video information according to another exemplary embodiment of the present disclosure;
FIG. 10 is a block diagram illustrating an apparatus for sharing video information according to still another exemplary embodiment of the present disclosure;
FIG. 11 is a block diagram illustrating an apparatus for sharing video information according to yet still another exemplary embodiment of the present disclosure;
FIG. 12 is a block diagram illustrating an apparatus for sharing video information according to an exemplary embodiment of the present disclosure; and
FIG. 13 is a block diagram illustrating an apparatus for sharing video information according to another exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of the exemplary embodiments do not represent all implementations consistent with the present disclosure. Instead, they are merely examples of apparatuses and methods consistent with aspects related to the present disclosure as recited in the appended claims.

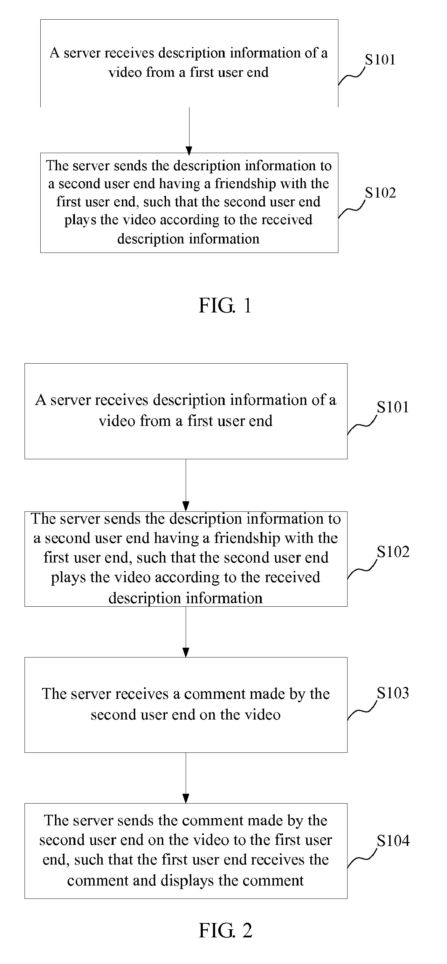

FIG. 1 is a flowchart illustrating a method for sharing video information according to an exemplary embodiment of the present disclosure. The method may be applicable to a server. Referring to FIG. 1, the method may include the following steps.

In step S101, a server receives description information of a video from a first user end.

In some scenarios, the first user end may be a personal computer (PC), a smart phone, a tablet computer, or the like; and may also be a combination of a television and an Internet video set-top box, or the like. The present disclosure sets no limitation to the specific form of the first user end.

When the first user end is watching a video, the first user end may, at any time, give a piece of description information with respect to the video, and send the description information to the server.

In step S102, the server sends the description information to a second user end having a friendship with the first user end, such that the second user end plays the video according to the received description information.

In some scenarios, the friendship of the first user end may be an association relationship defined by the first user end (for example, the second user end may be a "friend" added by the first user end), or may be an association relationship determined by initiative judgment by the server (for example, the second user end may be a user within the same IP range as the first user end). Herein, the server may pull the friend list of the first user end, and obtain the second user end having a friendship with the first user end by means of matching based on the friend list of the first user end, or the like. However, the present disclosure sets no limitation thereto. In addition, it should be understood that there may be one or more second user ends.

In addition, the above-described friendship may be established after the server receives the description information, or may be established in the process of communication with the first user end and directly used after the description information is received.

In this embodiment or in other embodiments of the present disclosure, the description information may include at least one of: a play progress of the video being currently watched by the first user end, a comment made by the first user end on the video, an identifier of the video, a play address of the video, and a play progress of the video when the first user end comments on the video.

Referring to FIG. 2, in this embodiment or in other embodiments of the present disclosure, after the description information is sent to a second user end having a friendship with the first user end, the method may further include the following steps.

In step S103, the server receives a comment made by the second user end on the video.

In step S104, the server sends the comment made by the second user end on the video to the first user end, such that the first user end receives the comment and displays the comment.

Upon receiving the description information of the video, the second user end may make a comment on the video, or make a response to a comment made by the first user end on the video, to respond to the first user end, thereby implementing information exchange with the first user end.

For example, the first user end may be a set-top box plus a television, and the second user end may be a smart phone. The first user end watches an Internet video, and gives, at some time, a piece of description information with respect to the watched Internet video via a remote control or a keyboard, for example, a comment on the watched video. The set-top box sends the description information to the server. The server forwards the description information to the second user end. Upon receiving the description information, the second user end may make a response thereto, and the server forwards the response to the first user end.

In addition, the second user end may also request the server to play the video. In some scenarios, when the second user end requests the server to play the video, some options may be additionally defined, for example, playing the video from the start of the video, or playing the video from a play progress of the video when the first user end gives the description information, or playing the video from a play progress of the video being currently watched by the first user end, or the like. Nevertheless, in some other scenarios, the server may also initiatively determine to play the video for the second user end from which play progress according to some predetermined rules, which is, however, not limited in the present disclosure.

In this embodiment, a server may send description information of a video on a terminal to another terminal. In this way, video information is propagated from one terminal to another terminal, such that the propagation of the video information is not limited between a server and terminals, and timely sharing of playing of videos may be implemented between terminals, thereby constituting a video information pushing and sharing mechanism between terminals. This hence achieves a higher propagation speed of the video information, and thus greatly improves the usage rate of the video resources.

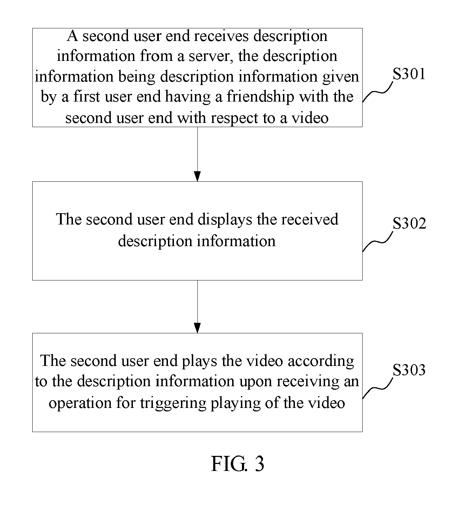

FIG. 3 is a flowchart illustrating a method for sharing video information according to still another exemplary embodiment of the present disclosure. The method may be applicable to a second user end. Referring to FIG. 3, the method according to this embodiment may include the following steps.

In step S301, a second user end receives description information from a server, wherein the description information is description information given by a first user end having a friendship with the second user end with respect to a video.

In this embodiment or in other embodiments of the present disclosure, the description information may include at least one of: a play progress of the video being currently watched by the first user end, a comment made by the first user end on the video, an identifier of the video, a play address of the video, and a play progress of the video when the first user end comments on the video.

In step S302, the second user end displays the received description information.

In step S303, the second user end plays the video according to the description information upon receiving an operation for triggering playing of the video.

Upon receiving the description information, a user of the second user end may trigger a request for playing the video according to an information prompt option.

Exemplarily, in this embodiment or in other embodiments of the present disclosure, the playing the video according to the description information may include:

if the description information includes an identifier of the video or/and a play address of the video, acquiring the video according to the identifier or/and the play address, and playing the video from the start of the video; or

if the description information includes an identifier of the video or/and a play address of the video, and the description information further includes a play progress of the video being currently watched by the first user end, acquiring the video according to the identifier or/and the play address, and playing the video from the play progress of the video being currently watched by the first user end; or

if the description information includes an identifier of the video or/and a play address of the video, and the description information further includes a play progress of the video when the first user end comments on the video, acquiring the video according to the identifier or/and the play address, and playing the video from the play progress of the video when the first user end comments on the video.

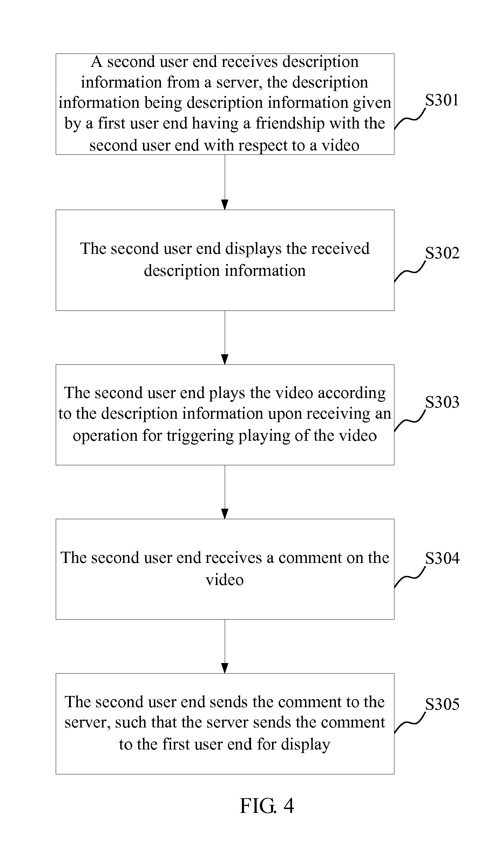

In addition, referring to FIG. 4, in this embodiment or in other embodiments of the present disclosure, after the playing the video according to the description information, the method may further include the following steps.

In step S304, the second user end receives a comment on the video.

In step S305, the second user end sends the comment to the server, such that the server sends the comment to the first user end for display.

The user of the second user end may make a comment when watching the video, and then the server may forward the comment to the first user end. In this way, the video is shared between the two user ends, and interaction or exchange may be implemented therebetween.

In this embodiment, a server may send description information of a video on a terminal to another terminal. In this way, video information is propagated from one terminal to another terminal, such that the propagation of the video information is not limited between a server and terminals, and timely sharing of playing of videos may be implemented between terminals, thereby constituting a video information pushing and sharing mechanism between terminals. This hence achieves a higher propagation speed of the video information, and thus greatly improves the usage rate of the video resources.

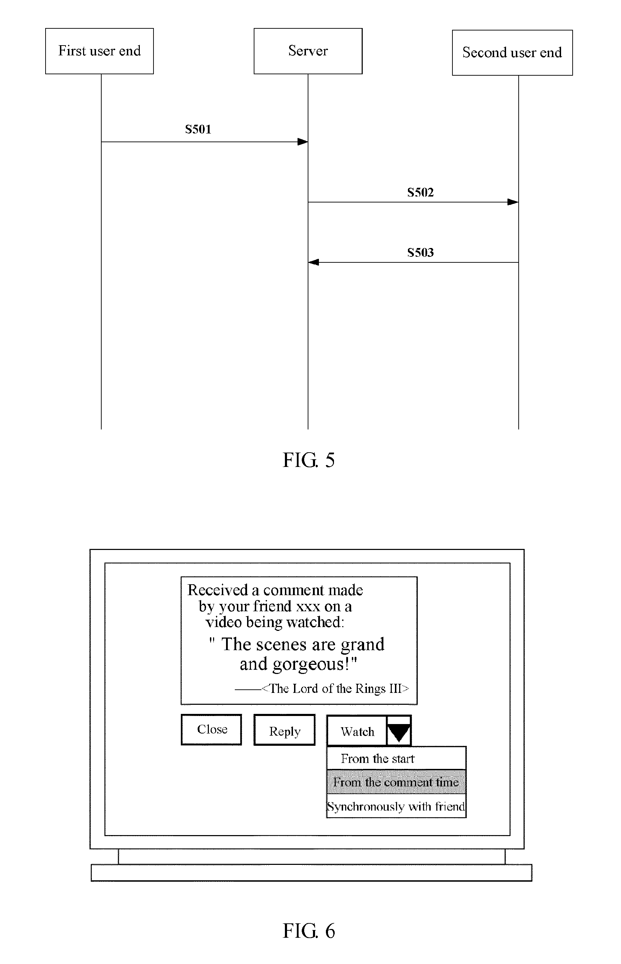

FIG. 5 is a schematic diagram illustrating signaling of a method for sharing video information according to an exemplary embodiment of the present disclosure.

In step S501, a first user end sends description information of the video to a server. The first user end may encapsulate such contents as a description content given by the user when watching, time of the description, and a video address into description information, and send the description information to the server. Table 1 illustrates an example of the description information.

**Table 1**

| Video Name | Description Content | Time | Video Address |
|---|---|---|---|
| The Lord of the Rings III | "The scenes are grand and gorgeous!" | 2.21 16:28:50 | xxxxxxxxx |

In step S502, the server forwards the description information to a second user end.

In step S503, upon receiving the description information of the video, the second user end may request watching of the video according to the description information.

Exemplarily, referring to FIG. 6, FIG. 6 is a schematic diagram illustrating an interface after a second user end receives description information. In the interface, a user of the second user end may select a video watching manner, for example, "watching from the start", "watching from the comment time", "watching synchronously with friend" (i.e., watching from a play progress of the video being currently watched by the first user end). Subsequently, the second user end sends a request for playing the video to the server according to the user's selection, and upon receiving the request, the server provides a service of playing the video for the second user end.

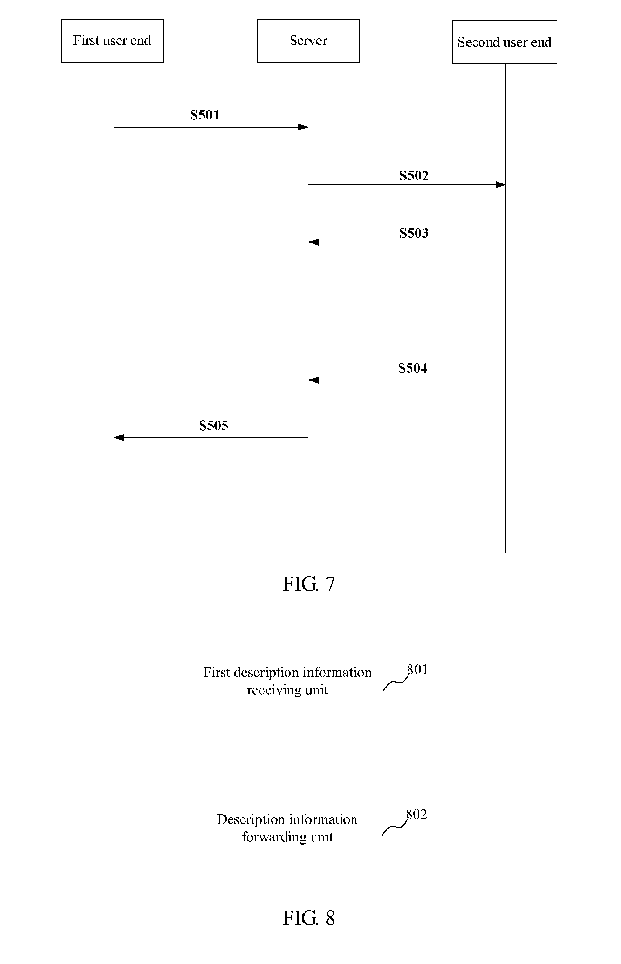

In some other scenarios, after step S503, the second user end may also make a comment on the video and share the comment with the first user end, as illustrated in FIG. 7.

In step S504, the second user end sends the responded comment to the server.

In step S505, the server forwards the comment to the first user end.

In the embodiments of the present disclosure, a server may send description information of a video on a terminal to another terminal. In this way, video information is propagated from one terminal to another terminal, such that the propagation of the video information is not limited between a server and terminals, and timely sharing of playing of videos may be implemented between terminals, thereby constituting a video information pushing and sharing mechanism between terminals. This hence achieves a higher propagation speed of the video information, and thus greatly improves the usage rate of the video resources.

FIG. 8 is a block diagram illustrating an apparatus for sharing video information according to an exemplary embodiment of the present disclosure. The apparatus may be applicable to a server. Referring to FIG. 8, the apparatus may include:

a first description information receiving unit 801, configured to receive description information of a video from a first user end; and

a description information forwarding unit 802, configured to send the description information to a second user end having a friendship with the first user end, such that the second user end plays the video according to the received description information.

In this embodiment or in other embodiments of the present disclosure, the description information may include at least one of: a play progress of the video being currently watched by the first user end, a comment made by the first user end on the video, an identifier of the video, a play address of the video, and a play progress of the video when the first user end comments on the video.

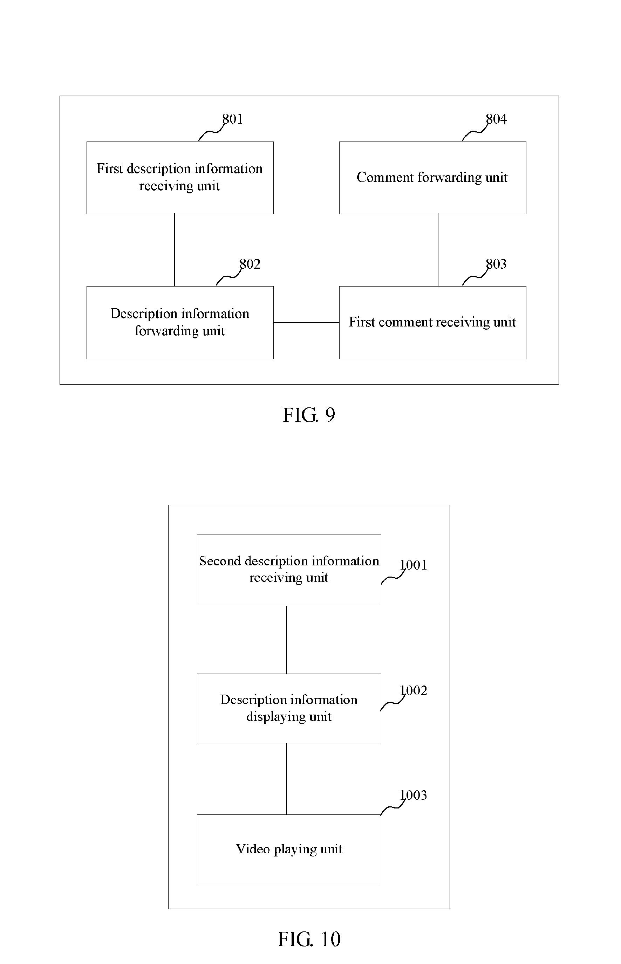

Referring to FIG. 9, in this embodiment or in other embodiments of the present disclosure, the apparatus may further include:

a first comment receiving unit 803, configured to receive a comment made by the second user end on the video; and

a comment forwarding unit 804, configured to send the comment made by the second user end on the video to the first user end, such that the first user end receives the comment and displays the comment.

With respect to the apparatuses in the above embodiments, the specific implementations of operations executed by various units thereof have been described in detail in the embodiments illustrating the methods, which are not described herein any further.

FIG. 10 is a block diagram illustrating an apparatus for sharing video information according to another exemplary embodiment of the present disclosure. The apparatus may be applicable to a second user end. Referring to FIG. 10, the apparatus may include:

a second description information receiving unit 1001, configured to receive description information from a server, the description information being description information given by a first user end having a friendship with the second user end with respect to a video;

a description information displaying unit 1002, configured to display the description information; and

a video playing unit 1003, configured to play the video according to the description information upon receiving an operation for triggering playing of the video.

In this embodiment or in other embodiments of the present disclosure, the description information may include at least one of: a play progress of the video being currently watched by the first user end, a comment made by the first user end on the video, an identifier of the video, a play address of the video, and a play progress of the video when the first user end comments on the video.

In this embodiment or in other embodiments of the present disclosure, when playing the video according to the description information, the video playing unit is configured to:

if the description information includes an identifier of the video or/and a play address of the video, acquire the video according to the identifier or/and the play address, and play the video from the start of the video; or

if the description information includes an identifier of the video or/and a play address of the video, and the description information further includes a play progress of the video being currently watched by the first user end, acquire the video according to the identifier or/and the play address, and play the video from the play progress of the video being currently watched by the first user end; or

if the description information includes an identifier of the video or/and a play address of the video, and the description information further includes a play progress of the video when the first user end comments on the video, acquire the video according to the identifier or/and the play address, and play the video from the play progress of the video when the first user end comments on the video.

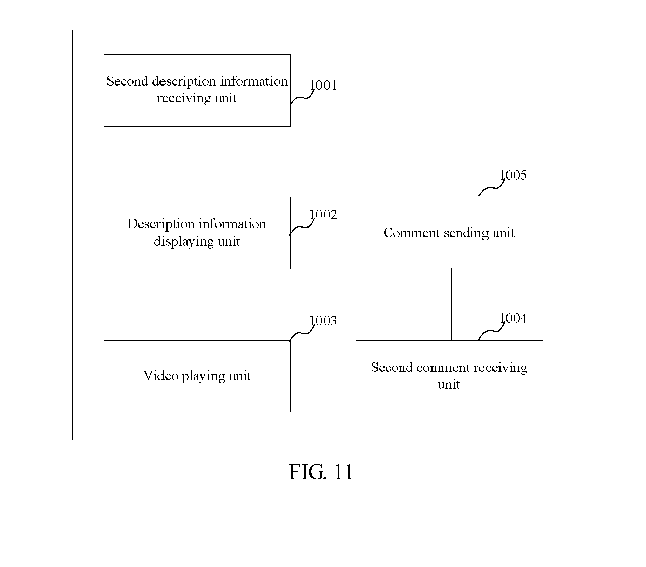

Referring to FIG. 11, in this embodiment or in other embodiments of the present disclosure, the apparatus may further include:

a second comment receiving unit 1004, configured to receive a comment on the video; and

a comment sending unit 1005, configured to send the comment to the server, such that the server sends the comment to the first user end for display.

With respect to the apparatuses in the above embodiments, the specific implementations of operations executed by various units thereof have been described in detail in the embodiments illustrating the methods, which are not described herein any further.

The present disclosure further provides an apparatus for sharing video information. The apparatus includes:

a processor; and

a memory for storing instructions executable by the processor;

wherein the processor is configured to:

receive description information of a video from a first user end; and

send the description information to a second user end having a friendship with the first user end, such that the second user end plays the video according to the received description information.

The present disclosure further provides a non-transitory computer-readable storage medium, which, when instructions in the storage medium are executed by a processor of a server, causes the server to perform a method for sharing video information, wherein the method includes:

receiving description information of a video from a first user end; and

sending the description information to a second user end having a friendship with the first user end, such that the second user end plays the video according to the received description information.

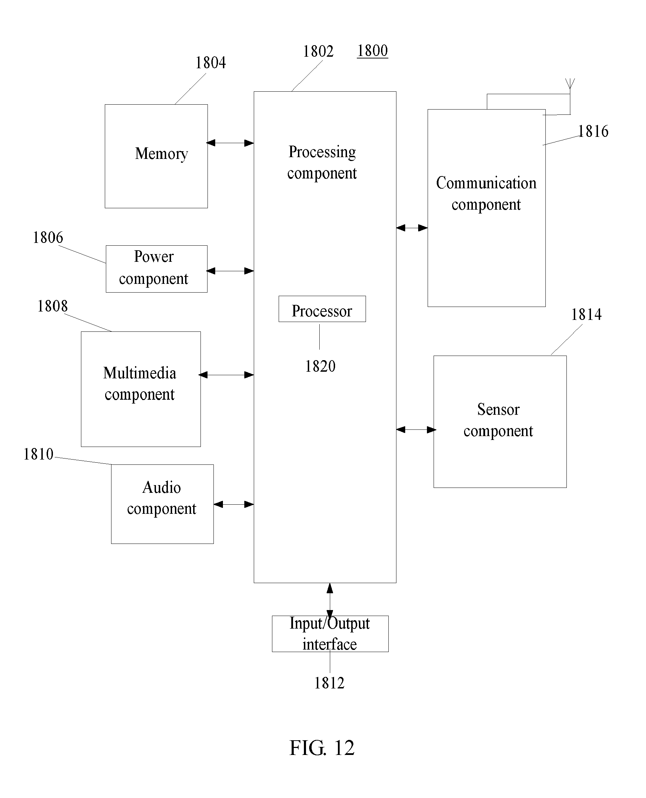

FIG. 12 is a block diagram illustrating an apparatus for sharing video information according to an exemplary embodiment of the present disclosure. For example, the apparatus 1800 may be a mobile phone, a computer, a digital broadcast terminal, a messaging device, a gaming console, a tablet, a medical device, exercise equipment, a personal digital assistant, and the like.

Referring to FIG. 12, the apparatus 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the apparatus 1800, such as the operations associated with display, telephone calls, data communications, camera operations, and recording operations. The processing component 1802 may include one or more processors 1820 to execute instructions to perform all or a part of the steps in the above-described methods. In addition, the processing component 1802 may include one or more modules which facilitate the interaction between the processing component 1802 and other components. For example, the processing component 1802 may include a multimedia module to facilitate the interaction between the multimedia component 1808 and the processing component 1802.

The memory 1804 is configured to store various types of data to support the operations of the apparatus 1800. Examples of such data include instructions for any application or method operated on the apparatus 1800, contact data, phonebook data, messages, pictures, videos, and the like. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the apparatus 1800. The power component 1806 may include a power management system, one or more power supplies, and other components associated with the generation, management, and distribution of power in the apparatus 1800.

The multimedia component 1808 includes a screen providing an output interface between the apparatus 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and/or the rear camera may receive external multimedia data while the apparatus 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone (MIC) configured to receive an external audio signal when the apparatus 1800 is in an operation mode, such as a call mode, a recording mode, or a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and a peripheral interface module, such as a keyboard, a click wheel, a button, or the like. The buttons may include, but are not limited to, a home button, a volume button, a starting button, and a locking button.

The sensor component 1814 includes one or more sensors to provide status assessments of various aspects of the apparatus 1800. For example, the sensor component 1814 may detect an open/closed status of the apparatus 1800, relative positioning of components, e.g., the display and the keypad, of the apparatus 1800, a change in position of the apparatus 1800 or a component of the apparatus 1800, a presence or absence of user contact with the apparatus 1800, an orientation or an acceleration/deceleration of the apparatus 1800, and a change in temperature of the apparatus 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communications, wired or wirelessly, between the apparatus 1800 and other devices. The apparatus 1800 may access a wireless network based on a communication standard, such as WiFi, 2G, or 3G, or a combination thereof. In one exemplary embodiment, the communication component 1816 receives a broadcast signal or broadcast associated information from an external broadcast management system via a broadcast channel. In one exemplary embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 1804, executable by the processor 1820 in the apparatus 1800, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

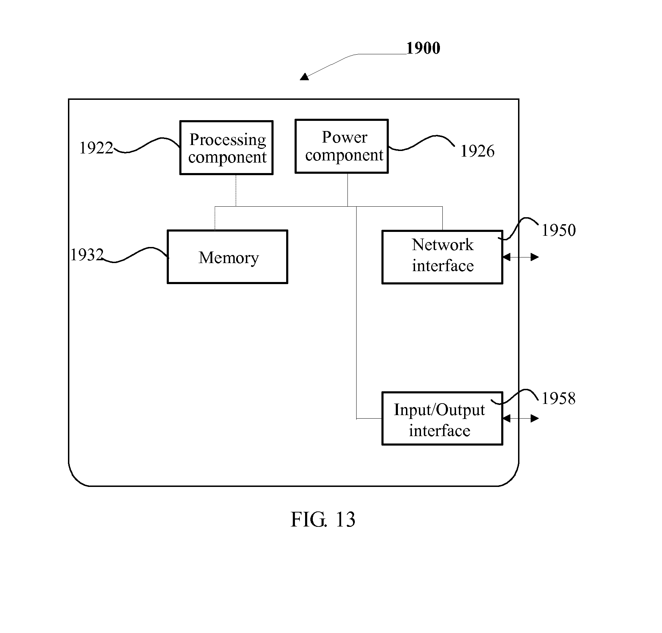

FIG. 13 is a block diagram illustrating an apparatus for sharing video information according to another exemplary embodiment of the present disclosure. For example, the apparatus 1900 may be provided as a server.

Referring to FIG. 13, the apparatus 1900 includes a processing component 1922 which further includes one or more processors, and memory resources represented by a memory 1932, configured to store instructions executable by the processing component 1922, for example, applications. The applications stored in the memory 1932 may include one or more than one module each corresponding to a group of instructions. In addition, the processing component 1922 is configured to execute the instructions, to perform the above methods.

The apparatus 1900 may further include: a power component 1926, configured to perform power management in the apparatus 1900; a wired or wireless network interface 1950, configured to connect the apparatus 1900 to the network; and an input/output (I/O) interface 1958. The apparatus 1900 may operate an operating system stored in the memory 1932, for example, Windows Server (trade mark), Mac OS X (trade mark), Unix (trade mark), Linux (trade mark), FreeBSD (trade mark), or the like.

Other embodiments of the present disclosure will be apparent to those skilled in the art from consideration of the specification and practice of disclosure herein. This application is intended to cover any variations, uses, or adaptations of the present disclosure following the general principles thereof and including such departures from the present disclosure as coming within common knowledge or customary technical means in the art. It is intended that the specification and examples be considered as exemplary only, with the true scope of the present invention being indicated by the appended claims.

It will be appreciated that the present invention is not limited to the exact structure that has been described above and illustrated in the accompanying drawings, and that various modifications and changes can be made without departing from the scope thereof. The scope of the present invention is defined by the appended claims.

## Claims

1. A method for sharing video information, **characterized in that** the method comprises:
receiving (S101), by a server (1900), description information of a video from a first user end; and
sending (S102) the description information to a second user end having a friendship with the first user end, such that the second user end plays the video according to the received description information.

2. The method according to claim 1, **characterized in that** the description information comprises at least one of: a play progress of the video being currently watched by the first user end, a comment made by the first user end on the video, an identifier of the video, a play address of the video, and a play progress of the video when the first user end comments on the video.

3. The method according to claim 1 or 2, **characterized in that** after the sending the description information to a second user end having a friendship with the first user end (S102), the method further comprises:
receiving (S103) a comment made by the second user end on the video; and
sending (S104) the comment made by the second user end on the video to the first user end, such that the first user end receives and displays the comment.

4. A method for sharing video information, **characterized in that** the method comprises:
receiving (S301), by a second user end, description information from a server (1900), the description information being description information of a video given by a first user end having a friendship with the second user end;
displaying (S302) the description information; and
playing (S303) the video according to the description information upon receiving an operation for triggering playing of the video.

5. The method according to claim 4, **characterized in that** the description information comprises at least one of: a play progress of the video being currently watched by the first user end, a comment made by the first user end on the video, an identifier of the video, a play address of the video, and a play progress of the video when the first user end comments on the video.

6. The method according to claim 4 or 5, **characterized in that** the playing the video according to the description information (S303) comprises:
if the description information comprises an identifier of the video or/and a play address of the video, acquiring the video according to the identifier or/and the play address, and playing the video from the start of the video; or
if the description information comprises an identifier of the video or/and a play address of the video, and the description information further comprises a play progress of the video being currently watched by the first user end, acquiring the video according to the identifier or/and the play address, and playing the video from the play progress of the video being currently watched by the first user end; or
if the description information comprises an identifier of the video or/and a play address of the video, and the description information further comprises a play progress of the video when the first user end comments on the video, acquiring the video according to the identifier or/and the play address, and playing the video from the play progress of the video when the first user end comments on the video.

7. The method according to any one of claims 4 to 6, **characterized in that** after the playing the video according to the description information (S303), the method further comprises:
receiving (S304) a comment on the video; and
sending (S305) the comment to the server (1900), such that the server sends the comment to the first user end for display.

8. An apparatus for sharing video information, **characterized in that** the apparatus comprises:
a first description information receiving unit (801), configured to receive description information of a video from a first user end;
a description information forwarding unit (802), configured to send the description information to a second user end having a friendship with the first user end, such that the second user end plays the video according to the received description information.

9. The apparatus according to claim 8, **characterized in that** the description information comprises at least one of: a play progress of the video being currently watched by the first user end, a comment made by the first user end on the video, an identifier of the video, a play address of the video, and a play progress of the video when the first user end comments on the video.

10. The apparatus according to claim 8 or 9, **characterized in that** the apparatus further comprises:
a first comment receiving unit (803), configured to receive a comment made by the second user end on the video; and
a comment forwarding unit (804), configured to send the comment made by the second user end on the video to the first user end, such that the first user end receives and displays the comment.

11. An apparatus for sharing video information, **characterized in that** the apparatus comprises:
a second description information receiving unit (1001), configured to receive description information from a server (1900), the description information being description information of a video given by a first user end having a friendship with a second user end;
a description information displaying unit (1002), configured to display the description information; and
a video playing unit (1003), configured to play the video according to the description information upon receiving an operation for triggering playing of the video.

12. The apparatus according to claim 11, **characterized in that** the description information comprises at least one of: a play progress of the video being currently watched by the first user end, a comment made by the first user end on the video, an identifier of the video, a play address of the video, and a play progress of the video when the first user end comments on the video.

13. The apparatus according to claim 11 or 12, **characterized in that** when playing the video according to the description information, the video playing unit (1003) is configured to:
if the description information comprises an identifier of the video or/and a play address of the video, acquire the video according to the identifier or/and the play address, and play the video from the start of the video; or
if the description information comprises an identifier of the video or/and a play address of the video, and the description information further comprises a play progress of the video being currently watched by the first user end, acquire the video according to the identifier or/and the play address, and play the video from the play progress of the video being currently watched by the first user end; or
if the description information comprises an identifier of the video or/and a play address of the video, and the description information further comprises a play progress of the video when the first user end comments on the video, acquire the video according to the identifier or/and the play address, and play the video from the play progress of the video when the first user end comments on the video.

14. The apparatus according to any one of claims 11 to 13, **characterized in that** the apparatus further comprises:
a second comment receiving unit (1004), configured to receive a comment on the video;
and
a comment sending unit (1005), configured to send the comment to the server, such that the server sends the comment to the first user end for display.

15. An apparatus for sharing video information, **characterized by** comprising:
a processor; and
a memory for storing instructions executable by the processor;
wherein the processor is configured to perform the steps of any of claims 1 to 7.

16. A computer program product comprising instructions which when executed on a computer cause the computer to perform a method according to any one of claims 1 to 7.
